# DEMANDE DE BREVET EUROPEEN

(11) **EP 3 675 581 A1**
(43) Date de publication de la demande: **01.07.2020**
(21) Numéro de dépôt: 19220125.9
(22) Date de dépôt: 30.12.2019
(51) Int. Cl.: H04W 72/04

(54) **ETABLISSEMENT D'UNE LIAISON D'ECHANGE DE DONNEES SOUS PROTOCOLE IP ENTRE DES STATIONS DE BASE DE STRUCTURES MOBILES AVEC PARTAGE DE LA BANDE DE FREQUENCE EN SOUS-BANDES DE FREQUENCES**

(30) Priorité: 30.12.2018 FR 1874390
(71) Demandeur: Air Lynx, 91940 Les Ulis (FR)
(72) Inventeur: PISON, Laurent, 78760 Jouars Pontchartrain (FR)
(74) Mandataire: A.P.I. Conseil

(57) **Abrégé**

Il est divulgué un procédé d'établissement d'une liaison d'échange de données sous protocole IP entre au moins deux structures mobiles (113,114). Le procédé permet de partager la bande de fréquence utilisée pour les liaisons de communication cellulaire d'une station de base (103,104) d'une structure mobile en une pluralité de sous-bandes de fréquence (115,116) distinctes chacune utilisée pour établir des liaisons d'échange de données sous protocole IP de type backhaul, avec plusieurs autres stations de base de différentes structures mobiles, et pour les communications cellulaires avec les terminaux mobiles de la structure mobile. Il permet ainsi d'établir un réseau backhaul par lequel chaque station de base peut échanger des données sous protocole IP avec une autre station de base dans une sous-bande de fréquence qui lui est spécifiquement attribuée.

## Description

La présente invention concerne de manière générale les systèmes de radiocommunications avec les mobiles, basés par exemple sur la technologie cellulaire LTE. En particulier, elle concerne l'établissement de liaisons de transport de données entre des stations de base implantées sur des structures mobiles avec partage de la bande de fréquence en sous-bandes de fréquences respectivement associées auxdites stations de base.

### [Art antérieur]

Les réseaux de télécommunication avec les mobiles, comme les réseaux cellulaires selon la norme LTE (« *Long Term Evolution* ») définie par le consortium 3GPP et son évolution LTE-A (« Advanced LTE »), permettent d'établir des communications à haut débit entre des terminaux mobiles, avec une faible latence et une tolérance élevée aux déplacements relatifs des différentes entités mobiles qui forment le réseau. L'architecture de ces réseaux repose généralement sur un ensemble de stations de base, appelées eNodeB (de l'anglais « *evolved Node B* ») dans la norme LTE, qui sont des nœuds de réseau fixes généralement reliés par liaison filaire formant la partie radio du réseau, appelée eUTRAN dans la norme LTE. Ces stations de bases établissent des communications sans fil avec des terminaux mobiles, appelés UEs (de l'anglais « *User Equipements* ») dans la norme LTE, via une interface radio spécifique, appelée interface Uu dans la norme LTE. La partie radio d'un réseau LTE se compose des eNodeB, d'antennes locales ou distantes, de liaisons en fibres optiques vers les antennes distantes (par exemple des liens de type CPRI pour « Common Public Radio Interface » en terminologie anglosaxonne) et des liaisons IP (« Internet Protocol ») reliant les eNodeB entre eux (interface X2) et avec le cœur de réseau (interface S1).

La norme LTE est compatible avec le concept de cellule mobile, suivant lequel une station de base peut elle-même être mobile, comme étant installée dans une structure mobile (par exemple un véhicule de pompiers, ou un véhicule de type « command-car » des forces de sécurité, par exemple), afin de pouvoir projeter en tout lieu d'un territoire une cellule LTE capable de servir un groupe de terminaux mobiles LTE utilisés par les agents des forces de police, des pompiers, etc.

Les échanges de données inter-stations de base ou inter-UEs qui ont lieu au sein du réseau doivent nécessairement passer par le cœur du réseau, appelé EPC (de l'anglais « *Evolved Packet Core* »). Autrement dit, les stations de base et les UEs du réseau ne peuvent pas communiquer directement entre elles, mais uniquement par l'intermédiaire des interfaces LTE, via le EPC. Ces interfaces comprennent notamment l'interface LTE-Uu pour les communications cellulaires entre les UEs et les eNodeBs, l'interface LTE-Un pour les échanges entre les eNodeBs et les relais (le cas échéant), et l'interface LTE-S1 pour les échanges de données entre les stations de base et le EPC.

Dans certains cas, toutefois, il peut être souhaitable d'établir une liaison de communication entre deux équipements donnés du réseau sans passer par le cœur de réseau, notamment si le lien entre une station de base et le cœur du réseau est perdu ou non fonctionnel. Un cas d'usage typique est par exemple celui des forces de sécurité et de secours (police, pompiers, ambulances, etc.) qui doivent pouvoir collaborer et communiquer entre elles suite par exemple à une catastrophe naturelle, comme un tremblement de terre ou un raz de marée ayant pour conséquence immédiate la mise hors service des installations de communication à terre qui participent au réseau de communication. Il existe donc le besoin d'une solution permettant de mettre en place des liaisons d'échange de données sous protocole IP entre des stations pour pallier la défaillance du réseau standard et/ou des équipements du cœur de réseau.

En résumé, notamment mais pas uniquement dans le contexte évoqué ci-dessus, il peut être utile pour des applications spécifiques d'établir des liaisons de communication de type backhaul entre plusieurs structures mobiles, afin de rendre les échanges de données entre ces structures mobiles autonomes par rapport au reste du réseau LTE standard.

Le brevet français FR3033121 divulgue une station de base comprenant un module d'interface radio adapté pour émettre et recevoir des données radiofréquences, et un bloc pilote adapté pour établir une liaison de communication et communiquer sur ladite liaison avec au moins un premier terminal d'utilisateur conformément à un protocole radio comprenant une section de protocole radio propre aux stations de base et une section de protocole radio propre aux terminaux d'utilisateurs, en utilisant ledit module d'interface radio. La station de base est caractérisée en ce qu'elle comprend en outre une unité de gestion configurée pour créer une pluralité de terminaux d'utilisateurs virtuels qui sont adaptés pour communiquer conformément audit protocole radio avec des stations de base voisines de ladite station de base, en utilisant ledit module d'interface radio. De telles stations de base implémentées dans des structures mobiles comme des navires, permettent de créer un réseau de transport de données de type backhaul entre les structures mobiles, qui peut présenter une topologie maillée. Ce réseau de backhaul maillé permet de transmettre directement entre stations de base des données selon par exemple le protocole de l'interface LTE-Uu pour des stations de base LTE (i.e., des eNodeBs).

Dans un tel système, toutefois, lorsqu'une station de base communique avec un terminal virtuel associé à une station de base voisine, elle le fait sur la même bande de fréquence que celle qu'elle utilise déjà pour communiquer avec les terminaux mobiles présents dans sa cellule mobile. Dit autrement, les différentes stations de base qui sont reliées entre-elles au sein du réseau de backhaul maillé ainsi formé, utilisent le même spectre de fréquence pour échanger des données entre elles que le spectre de fréquence utilisé pour des communications cellulaires avec les terminaux mobiles dans leur cellule mobile respective. En outre, ces communications cellulaires se font toutes par l'intermédiaire de modules d'interface radio eux aussi identiques, à savoir l'interface LTE-Uu et l'interface LTE-Un (qui est une interface dédiée aux relais, le cas échéant).

De ce fait, les risques d'interférences entre liens radio sont élevés. En effet, le fonctionnement des communications cellulaires avec des terminaux mobiles d'utilisateurs au sein de la cellule associée à une première structure mobile donnée peut être perturbé par les liens radio de type backhaul établis entre des terminaux virtuels associés à la station de base qui couvre cette cellule mobile, d'une part, et une station de base appartenant à une autre structure mobile, d'autre part.

En outre, la transmission de signaux de signalisation préalable à l'établissement d'un lien radio de type backhaul entre un terminal virtuel d'une première structure mobile et la station de base d'une seconde structure mobile peut être perturbée par les signaux émis par les terminaux mobiles présents dans la cellule de la station de base de la seconde structure mobile. Dans ce cas, les détecteurs de la station de base de la seconde structure peuvent en effet être éblouis par les signaux associés aux communications cellulaires internes à cette cellule et le cas échéant ils ne peuvent par détecter correctement un signal de signalisation du type PSS (de l'anglais « *Primary Synchronization Signal* ») ou de type SSS (de l'anglais « *Secondary Synchronization Signal* ») en provenance d'un terminal mobile virtuel de la première structure mobile.

### [Problème technique]

L'invention a pour but de remédier aux inconvénients de l'art antérieur. En particulier, l'invention a pour but de proposer un procédé d'établissement d'une liaison de transport de données sous protocole IP entre au moins deux structures mobiles, ledit procédé étant capable d'établir un réseau de type backhaul permettant une communication sous protocole IP pour relier les applications et services IP des structures mobiles. En outre, ce procédé doit permettre la mise en place rapide de la liaison avec un risque réduit d'interférence et cela malgré la mise en communication de plusieurs structures mobiles.

L'invention a en outre pour but de proposer une station de base capable d'établir une liaison de transport de données sous protocole IP entre au moins deux structures mobiles, ladite liaison permettant un réseau de type backhaul pour une communication sous protocole IP permettant de relier les applications et services IP des structures mobiles.

### [Brève description de l'invention]

L'invention propose une solution visant à pallier les inconvénients de l'art antérieur précités, en permettant de partager la bande de fréquence d'une station de base d'une station de base améliorée donnée en une pluralité de sous-bandes de fréquence distinctes dont une qui peut être utilisée pour établir des communications cellulaires avec les terminaux mobiles dans la cellule correspondante, et dont les autres peuvent être utilisées pour établir des liaisons de transport de données de type backhaul avec des stations de base appartenant à d'autres structures mobiles respectives.

A cet effet, un premier aspect de l'invention propose un procédé d'établissement d'une liaison de transport de données sous protocole IP entre au moins deux stations de base améliorées ayant chacune au moins une station de base qui est adaptée pour établir des liaisons de communication cellulaire avec des terminaux de communication mobiles via une interface radio déterminée dans une première bande de fréquence déterminée, chaque station de base améliorée comprenant en outre une entité de liaison configurée pour établir une liaison de transport de données de type backhaul via ladite interface radio déterminée, dans ladite première bande de fréquence déterminée, avec une station de base de l'autre station de base améliorée, le procédé comprenant les étapes suivantes mises en œuvre au sein de l'une desdites stations de base améliorées :
- détection, par une entité de commande associée à la station de base de la station de base améliorée, d'un événement extérieur indicatif de la présence d'une autre station de base améliorée de préférence dans l'environnement immédiat de ladite station de base améliorée ;
- analyse, par l'entité de commande de la station de base améliorée, de l'événement extérieur détecté et sélection, sur la base de l'événement extérieur détecté et analysé, de sous-bandes de fréquence à l'intérieur de la première bande de fréquence déterminée ;
- établissement d'une liaison de transport de données de type backhaul entre la station de base de la station de base améliorée et l'entité de liaison de l'autre station de base améliorée dans une première sous-bande de fréquence, et basculement de toutes les liaisons de communication cellulaire établies par la station de base de la station de base améliorée dans ladite première sous-bande de fréquence ; et,
- établissement d'une liaison de transport de données de type backhaul entre l'entité de liaison de la station de base améliorée et la station de base de l'autre station de base améliorée dans une seconde sous-bande de fréquence et basculement de toutes les liaisons de communication cellulaire établies par la station de base de l'autre structure mobile dans ladite seconde sous-bande de fréquence,
et dans lequel les étapes d'analyse, de sélection, d'établissement et de basculement sont répétées à chaque fois qu'un nouvel événement extérieur est détecté.

En particulier, l'invention propose un procédé d'établissement d'une liaison de transport de données sous protocole IP entre au moins deux stations de base améliorées pour des structures mobiles respectives, lesdites stations de base améliorées ayant chacune au moins une station de base qui est adaptée pour établir des liaisons de communication cellulaire avec des terminaux de communication mobiles via une interface radio déterminée dans une première bande de fréquence déterminée, chaque station de base améliorée comprenant en outre une entité de liaison configurée pour établir une liaison de transport de données de type backhaul via ladite interface radio déterminée, dans ladite première bande de fréquence déterminée, avec une station de base de l'autre station de base améliorée, le procédé comprenant les étapes suivantes mises en œuvre au sein de l'une desdites stations de base améliorées :
- détection, par une entité de commande associée à la station de base de la station de base améliorée, d'un événement extérieur indicatif de la présence d'une autre station de base améliorée de préférence dans l'environnement immédiat de ladite station de base améliorée ;
- analyse, par l'entité de commande de la station de base améliorée, de l'événement extérieur détecté et sélection, sur la base de l'événement extérieur détecté et analysé, de sous-bandes de fréquence à l'intérieur de la première bande de fréquence déterminée ;
- établissement d'une liaison de transport de données de type backhaul via l'interface radio déterminée entre la station de base de la station de base améliorée et l'entité de liaison de l'autre station de base améliorée dans une première sous-bande de fréquence, et basculement de toutes les liaisons de communication cellulaire établies par la station de base de la station de base améliorée dans ladite première sous-bande de fréquence ; et,
- établissement d'une liaison de transport de données de type backhaul via l'interface radio déterminée entre l'entité de liaison de la station de base améliorée et la station de base de l'autre station de base améliorée dans une seconde sous-bande de fréquence et basculement de toutes les liaisons de communication cellulaire établies par la station de base de l'autre structure mobile dans ladite seconde sous-bande de fréquence,
et dans lequel les étapes d'analyse, de sélection, d'établissement et de basculement sont répétées à chaque fois qu'un nouvel événement extérieur est détecté.

L'invention permet ainsi d'établir des liens de transport de données de type backhaul adaptés pour former un réseau de backhaul maillé grâce auquel chaque station de base peut échanger des données sous protocole IP avec une autre station de base dans une sous-bande de fréquence qui est spécifiquement attribuée à ce lien de transport de données de type backhaul. Ainsi, les échanges de données ne risquent pas d'être affectés par des interférences. En outre, l'attribution des ressources radio aux sous-bandes se fait de manière dynamique et permet donc d'ajuster en temps réel les capacités des liaisons de communication ainsi établies aux besoins réels pour assurer le trafic sur ces liaisons. Enfin, toutes les liaisons de communication établies par une station de base se font par l'intermédiaire d'un module d'interface radio unique et identique pour toutes les stations de base, quelle que soit l'entité avec laquelle elle communique, c'est-à-dire que ce soit avec ses terminaux mobiles pour les liaisons de communication cellulaire ou avec les terminaux de liaison des autres structures mobiles pour les liaisons de transport de données de type backhaul.

### Selon d'autres caractéristiques optionnelles du procédé :

- en cas de détection d'un nouvel événement indicatif de la présence d'une nième autre station de base améliorée dans l'environnement immédiat de la station de base améliorée, l'étape de sélection comprend la sélection de n+1 sous-bandes de fréquences associées aux n+1 stations de base améliorées, et dans lequel n liaisons de transport de données de type backhaul sont établies entre chaque station de base améliorée et une station de base respective de chacune des n autres stations de base améliorées par l'intermédiaire, respectivement, de n entités de liaison de ladite station de base améliorée. Cela permet avantageusement d'optimiser la répartition des sous-bandes de fréquence de manière dynamique en ajustant les capacités d'une ou plusieurs liaison(s) de communication cellulaire aux besoins réels associés à ces liaisons.
- les liaisons de communication cellulaire répondent à un codage OFDM (pour « Orthogonal frequency-division multiplexing » en terminologie anglosaxonne) ou un codage dérivé tel que OFDMA ou SC-FDMA (pour « Orthogonal Frequency-Division Multiple Access » et « single-carrier frequency division multiple access » en terminologie anglosaxonne).
- la bande de fréquence étant une bande de fréquence normalisée selon le standard LTE, les sous-bandes de la bande de fréquence qui sont sélectionnées à l'étape de sélection sont des bandes de fréquence qui sont contigües deux-à-deux et complémentaires entre elles dans ladite bande de fréquence. Ces caractéristiques permettent avantageusement de regrouper les bandes de fréquences des porteuses contiguës et moduler le signal sur l'ensemble de la bande de fréquence ainsi constituée. Cela permet également une plus grande densité spectrale, autorisant donc un débit de transmission plus important. Avantageusement, ces bandes de fréquences sont normalisées selon le standard LTE.
- la bande de fréquence déterminée est centrée sur une fréquence centrale F₀ et a une largeur spectrale de X₀ mégahertz, et dans lequel l'étape de sélection comprend la sélection de n sous-bandes centrées chacune sur une fréquence F₁, F2,... Fn, respectivement, et ayant une largeur spectrale X₁, X₂,... Xₙ respectivement, où X₁+X₂+... + Xₙ ≤ X₀. Avec X₁+X₂+... + Xₙ inférieur ou égale à X₀, cela permet avantageusement de démultiplier les connexions simultanées et ainsi d'optimiser la bande de fréquence centrale pour la transmission de données entre les stations de base améliorées.
- la largeur des sous bandes est sélectionnée parmi : 1,4 MHz, 3 MHz, 5 MHz, 10 MHz, 15 MHz et 20 MHz.
- un événement extérieur indicatif de la présence d'une autre station de base améliorée dans l'environnement immédiat de la station de base améliorée est un événement détecté automatiquement par des équipements de la station de base améliorée et est compris dans la liste comprenant : la détection de l'autre station de base améliorée par un radar ou la détection de l'autre station de base améliorée par un scanner radio. Alternativement ou complémentairement, les informations sur l'autre station de base améliorée peuvent être obtenues via un lien existant entre la station de base améliorée et une troisième structure.
- un événement extérieur indicatif de la présence d'une autre station de base améliorée dans l'environnement immédiat de la station de base améliorée est un évènement détecté par l'observation directe de l'autre station de base améliorée par un opérateur.
- le basculement dans une sous-bande de fréquence déterminée des liaisons de communication cellulaire établies par la station de base de la station de base améliorée comprend les étapes de :
   ∘ blocage, par la station de base, d'un canal physique d'accès aléatoire (PRACH - « Physical Random Access Channel » en terminologie anglosaxonne) en provenance des terminaux de communication mobiles ayant une liaison de communication cellulaire avec ladite station de base ;
   ∘ détachement des terminaux de communication mobiles ayant une liaison de communication cellulaire avec la station de base, de la bande de fréquence utilisée par ladite station de base pour ses liaisons de communication cellulaire de préférence avec une demande de se re-attacher à suivre ;
   ∘ reconfiguration des ressources radios disponibles pour la station de base dans la sous-bande de fréquence; et,
   ∘ déblocage du canal physique d'accès aléatoire pour le ré-attachement des terminaux de communication mobiles avec la station de base dans la sous-bande de fréquence.
   La demande de se re-attacher à suivre peut-être une demande de rattachement immédiat ou dans un délai prédéterminé. En particulier, la station radio fournit une cause qui demande au terminal de réaliser une opération tout de suite après. Une telle procédure permet de renforcer la stabilité du système de communication malgré une réduction de largeur de bande. Ainsi, l'ensemble de l'opération peut être réalisée en une ou 2 secondes, soit avec un impact minime sur le service des terminaux en Uu sous le secteur. Le service n'est donc pas ou quasiment pas perturbé.
- l'étape de sélection de sous-bandes est réalisée de manière à garantir une valeur déterminée de débit pour chaque liaison de transport de données de type backhaul.
- des liaisons de transport de données de type backhaul établies entre l'entité de liaison de la station de base améliorée et la station de base de l'autre station de base améliorée se font via des liaisons simultanées bidirectionnelles. De préférence, toutes les liaisons de transport de données de type backhaul établies entre l'entité de liaison de la station de base améliorée et la station de base de l'autre station de base améliorée se font via des liaisons simultanées bidirectionnelles. Les liaisons bidirectionnelles comportent un flux UL (pour « uplink » en terminologie anglo-saxonne) depuis l'entité de liaison vers station de base et un flux DL (pour « downlink » en terminologie anglo-saxonne). De préférence, le flux DL est privilégié pour la transmission de données relatives à des échanges entre applications et services IP.
- Alternativement ou complémentairement, des liaisons de transport de données de type backhaul établies entre l'entité de liaison de la station de base améliorée et la station de base de l'autre station de base améliorée se font via des liaisons unidirectionnelles, notamment selon un protocole eMBMS (pour « enhanced Multimedia Broadcast/Multicast Service » en terminologie anglo-saxonne).

Selon un autre aspect, l'invention porte sur une station de base améliorée pour une structure mobile , ladite station de base améliorée comportant une station de base adaptée pour établir des liaisons de communication cellulaire avec des terminaux de communication mobiles via une interface radio déterminée dans au moins une dans une première bande de fréquence déterminée, ladite station de base améliorée étant caractérisée en ce qu'elle comporte une entité de commande et une entité de liaison configurée pour établir une liaison de transport de données sous protocole IP de type backhaul via ladite interface radio déterminée, dans ladite première bande de fréquence déterminée, avec une station de base d'une autre station de base améliorée, ladite station de base améliorée étant configurée pour mettre en œuvre les étapes suivantes :
- détecter, par l'entité de commande associée à la station de base de la station de base améliorée, un évènement extérieur indicatif de la présence de l'autre station de base améliorée, de préférence dans l'environnement immédiat de ladite station de base améliorée,
- analyser, par l'entité de commande de la station de base améliorée, l'événement extérieur détecté et sélectionner, sur la base de l'événement extérieur détecté et analysé, des sous-bandes de fréquence à l'intérieur de la première bande de fréquence déterminée ;
- établir une liaison de transport de données de type backhaul, de préférence via l'interface radio déterminée, entre la station de base de la station de base améliorée et une entité de liaison de l'autre station de base améliorée dans une première sous-bande de fréquence, et basculer toutes les liaisons de communication cellulaire établies par la station de base de la station de base améliorée dans ladite première sous-bande de fréquence ; et,
- établir une liaison de transport de données de type backhaul, de préférence via l'interface radio déterminée, entre l'entité de liaison de la station de base améliorée et la station de base de l'autre station de base améliorée dans une seconde sous-bande de fréquence.

En outre, la station de base améliorée peut être configurée pour, à chaque fois qu'un nouvel évènement extérieur est détecté, répéter les étapes d'analyse, de sélection, d'établissement et de basculement.

Avantageusement, la station de base améliorée selon l'invention est configurée pour mettre en œuvre le procédé selon l'invention et ses caractéristiques optionnelles et/ou avantageuses.

Selon un autre aspect, l'invention porte sur un système de radiocommunication comportant plusieurs structures mobiles sélectionnés par exemple parmi : des campements nomades ou des véhicules tels que des véhicules terrestres, véhicules aériens ou véhicules maritimes, lesdites structures mobiles étant équipées de stations de base améliorées aptes à mettre en œuvre un procédé d'établissement d'une liaison de transport de données sous protocole IP selon l'invention. Alternativement les structures mobiles sont équipées de stations de base améliorées selon l'invention. Avantageusement, les structures mobiles sont des structures n'étant pas reliées par un système de communication filaire (e.g. fibre optique).

D'autres avantages et caractéristiques de l'invention apparaitront à la lecture de la description qui va suivre, donnée à titre d'exemple illustratif et non limitatif, en référence aux figures des dessins annexés dans lesquels :
**[****Fig. 1****]** est un schéma fonctionnel illustrant un exemple de système de radiocommunication mobile au sein duquel le procédé selon l'invention peut être mis en œuvre ;
**[****Fig. 2****]** est un schéma illustrant un exemple de partage en sous-bandes de fréquence d'une bande de fréquence utilisée à l'origine par deux stations de base voisines de stations de base améliorées respectives à la fois, selon des modes de mise en œuvre de l'invention ; et,
**[****Fig. 3****]** est un diagramme d'étapes d'un mode de mise en œuvre du procédé selon l'invention.

### [Description de l'invention]

Dans la description qui suit, les termes « structure mobile » désignent une entité qui comprend des moyens de communications cellulaire avec des terminaux d'utilisateur appartenant à la structure mobile. La structure est mobile, c'est-à-dire qu'elle peut être en mouvement, stationnaire (i.e., immobile) ou nomade (i.e., alternant des phases de mobilité et des phases stationnaires). Les structures mobiles peuvent correspondre, plus généralement, à toute infrastructure fixe terrestre et/ou navale, c'est-à-dire ne disposant pas de moyens matériels adaptés pour se mouvoir, ou encore à toute structure mobile terrestre et/ou navale disposant de moyens adaptés pour se mettre en mouvement, stationnaire (i.e., immobile) ou nomade (i.e., alternant des phases de mobilité et des phases stationnaires). Avantageusement, les structures mobiles selon l'invention ne sont pas connectées par des liaisons filaires.

Le terme « réseau de backhaul », ou « backhaul », est utilisé dans les réseaux de téléphonie mobile comme LTE pour désigner le réseau et les liens de transport de données entre le cœur de réseau et les antennes relais de la partie radio du réseau de téléphonie mobile. C'est un réseau intermédiaire qui permet l'émission et la réception de données entre les stations de base qui font office d'équipements de raccordement d'abonnés (i.e., d'utilisateurs mobiles), d'une part, et le cœur de réseau, d'autre part. De manière générale, la création d'un tel réseau peut permettre l'établissement de liaisons de communication entre les différents nœuds d'une infrastructure de façon à permettre une communication entre les applications desdits nœuds au travers de services IP dédiés. Ces échanges sont réalisés sous le protocole IP (« *Internet Protocol* »)*.* Contrairement à la présente invention, dans les réseaux de télécommunication fixes ou mobiles, un réseau de backhaul classique utilise largement la fibre optique pour le transport des données.

Par « évènement extérieur » on entend tout évènement extrinsèque de nature à indiquer la présence d'une autre structure mobile à proximité de la structure concernée, c'est-à-dire dans une zone de portée radio mutuelle des stations de base respectives de l'une et de l'autre des structures mobiles concernées. Par exemple, dans le cas où la structure mobile qui implémente le procédé est un navire, il peut s'agir de la détection automatique de la présence d'une autre structure mobile, par exemple un autre navire, par un système radar qui équipe la structure mobile en question. Dans un autre exemple, il peut s'agir de la détection de l'autre structure mobile par l'intermédiaire d'un scanner radio de la structure mobile considérée qui révèle une activité radio émanant de l'autre structure mobile. Dans un autre exemple encore, il peut s'agir d'une commande manuelle réalisée par un opérateur, par exemple une personne à la vigie d'un navire, suite à l'observation directe par cet opérateur de cette autre structure mobile dès lors qu'elle est à portée visuelle et/ou qu'elle manifeste sa présence de manière visible (par exemple par des sémaphores, une fusée éclairante, des signaux lumineux, etc.) ou à tout le moins détectable par tout moyen approprié. Dans un dernier exemple, il peut s'agir d'informations obtenues grâce à un autre lien de communication existant déjà entre les deux structures mobiles, par exemple l'envoi d'un message sur un canal radio de secours. Ces exemples ne sont pas limitatifs. De manière générale, tout évènement indicatif de la présence d'une seconde structure dans l'environnement de la structure concernée peut ainsi causer le procédé selon l'invention.

En outre, le terme « environnement immédiat » désigne ici une zone géographique autour de la station de base améliorée ou structure mobile 113 concernée dont l'étendue correspond sensiblement à celle de la zone de couverture radio de la station de base 103 de ladite station de base améliorée, c'est-à-dire à l'étendue de la cellule mobile de cette station de base améliorée. Cette zone géographique est telle que, dès qu'une autre station de base 104 appartenant à une autre structure 114 pénètre à l'intérieur de ladite zone, un évènement extérieur peut être détecté par une entité de commande associée à la station de base améliorée 101 de la structure mobile 113 concernée, et ce qui cause la mise en œuvre d'une itération du procédé pour configurer ou reconfigurer le partage de la bande de fréquence de la structure mobile 113 en sous-bandes de fréquence selon des modes de mise en œuvre de l'invention.

Par l'expression « sous-bande contigüe » on entend une bande de fréquence normalisée selon le standard LTE qui est immédiatement voisine dans le domaine fréquentiel de l'autre sous-bande de fréquence. Le terme complémentaire implique quant à lui le fait que l'ensemble formé par les deux sous-bandes utilisées par les deux stations de base des deux structures mobiles couvre le maximum de la bande de fréquence d'origine 201a, tout en respectant la normalisation des bandes de fréquence selon le standard LTE, c'est-à-dire tout en ayant des sous-bandes de fréquence dont la largeur spectrale est égale à 1,4 MHz, 3 MHz, 5 MHz ou 10 MHz. Ainsi, les deux sous-bandes de fréquence respectivement utilisées par les deux stations de base divisent la bande de fréquence d'origine en deux parties qui utilisent au mieux la bande de fréquence d'origine 201a, en sorte que l'efficacité spectrale est la meilleure possible : aucune ressource radio n'est gâchée du fait de la reconfiguration du spectre de fréquence résultant de la mise en œuvre de l'invention.

Dans un contexte d'intervention d'urgence, de catastrophe naturelle ou d'actions coordonnées de véhicules (e.g. terrestres, aériens ou maritimes), il peut être nécessaire d'établir une liaison d'échange de données sous protocole IP entre des stations de base de structures mobiles qui ne sont pas reliées à un cœur de réseau commun. Les structures mobiles sont par exemple des véhicules qui sont eux-mêmes équipés d'au moins une station de base dont la zone de couverture radio définit une cellule mobile, et d'au moins un terminal mobile. De telles structures mobiles peuvent correspondre, plus généralement, à toute infrastructure fixe, c'est-à-dire ne disposant pas de moyens matériels adaptés pour se mouvoir, ou encore à toute structure mobile terrestre, aérienne et/ou navale disposant de moyens adaptés pour se mettre en mouvement, stationnaire (i.e., immobile) ou nomade (i.e., alternant des phases de mobilité et des phases stationnaires). La station de base sert alors de nœud de réseau embarqué, et permet les échanges de données avec les terminaux mobiles qui sont sous sa couverture radio.

Lorsque les liaisons pour l'échange de données sous protocole IP entre les stations de base embarquées et un cœur du réseau sont dégradées, perdues ou inexistantes, les inventeurs ont développé une station de base améliorée et un procédé d'établissement d'une liaison d'échange de données sous protocole IP entre stations de base.

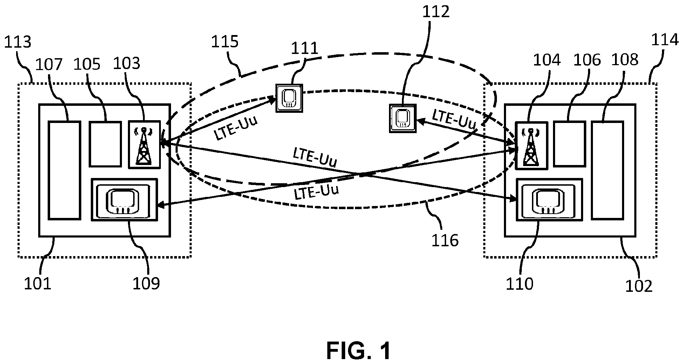

En référence au schéma de **la** **figure 1**, il va tout d'abord être décrit un exemple de système de radiocommunication mobile au sein duquel une station de base améliorée et un procédé selon l'invention peuvent être mis en œuvre.

Ainsi, selon un premier aspect, l'invention concerne une station de base améliorée 101 associée à une structure mobile, ladite station de base améliorée 101 comportant une station de base 103 adaptée pour établir des liaisons de communication cellulaire avec des terminaux de communication mobiles 111 via une interface radio déterminée LTE-Uu dans au moins une dans une première bande de fréquence 201a déterminée, une entité de commande 107 et une entité de liaison 109 configurée pour établir une liaison de transport de données, de préférence sous protocole IP, de type backhaul via ladite interface radio déterminée LTE-Uu, dans ladite première bande de fréquence déterminée, avec une station de base 104 d'une autre structure mobile 114.

Dans l'exemple représenté à la figure 1, les structures mobiles 113 et 114 sont chacune équipées de stations de bases améliorées 101 et 102 aussi appelés nœuds améliorés. Ces stations de base améliorées 101 et 102 comprennent en effet chacune au moins une station de base 103 et 104, respectivement, comme par exemple les entités appelées eNodeB (de l'anglais « *evolved Node B* ») dans le contexte des systèmes LTE. Chacune des stations de base améliorées 101 et 102 comprend aussi un cœur de réseau local 105 et 106, respectivement, comme par exemple un cœur de réseau appelé ePC (de l'anglais « *evolved Packet Core* ») dans les normes LTE. Enfin, chacune des stations de base améliorées 101 et 102 comprend une entité de commande 107 et 108 appelée RRCE (mis pour « *Radio Resource Coordination Entity* » en anglais) et un terminal de liaison dédié ou entité de liaison 109 et 110, respectivement, appelé IUE (mis pour « *Link User Equipment* » en anglais).

Les eNodeB 103 et 104 intégrées aux stations de bases améliorées 101 et 102, respectivement, sont par exemple des stations de base telles qu'elles sont couramment utilisées dans les réseaux de radiocommunication mobile basés sur les normes LTE du consortium 3GPP. De façon connue en soi par l'homme du métier, et conformément aux normes LTE, elles constituent la passerelle entre le cœur du réseau LTE de transport de données par protocole IP, d'une part, et les terminaux de communication mobiles, ou équipements utilisateurs UEs (de l'anglais *« User Equipment* ») 111 et 112, d'autre part. En particulier, les eNodeBs desservent des zones géographiques définies par l'étendue de leur couverture radio. Ces zones géographiques forment les cellules radio 115 et 116 au sein desquelles des communications radios sont établies entre chaque eNodeB et les terminaux mobiles (i.e., les UEs) 111 et 112 qui lui sont raccordés par des liaisons de communication cellulaire. Pour des raisons de lisibilité, les deux cellules représentées à la figure 1 et respectivement associées à l'eNodeB 103 et à l'eNodeB 104, ne comprennent qu'un seul UE chacune. Toutefois, l'homme du métier appréciera là-encore que le nombre de terminaux mobiles présents dans chaque cellule peut évidemment être supérieur à l'unité.

Au sein d'une cellule, les communications radio se font sur une bande de fréquence déterminée, centrée autour d'une fréquence F₀ déterminée et qui présente une largeur spectrale elle aussi déterminée, typiquement de plusieurs Mégahertz (MHz). Par exemple, la bande de fréquence prévue pour les liaisons de communications cellulaire établies dans la cellule a une largeur spectrale de 1,4 ; 3 ; 5 ; 10 ; 15 ; 20 ou 40 MHz, selon les spécificités propres à chaque application. Plus le trafic attendu dans la cellule est important, et plus la bande de fréquence prévue à l'origine pour les communications cellulaires de la station de base sera large. Dans les réseaux de communication avec les mobiles dans lesquels les stations de base sont fixes, les interférences entre les signaux radio émis par des stations de base respectives sont évitées par la définition d'un plan de fréquence qui tient compte du système antennaire de chaque station de base, c'est-à-dire du fait que chaque station de base comprend une pluralité d'antennes directives, avantageusement entre une et neuf, couvrant des secteurs angulaires respectifs de la cellule radio correspondante.

Comme il va être présenté plus en détail dans la suite, l'invention consiste à permettre à des eNodeB de différentes stations de base améliorées qui doivent échanger des données entre-elles, de le faire sur des sous-bandes de fréquence distinctes dans la bande de fréquence prévue à l'origine pour être toute entière utilisée par l'une comme par l'autre des stations de base de stations de base améliorées respectives pour établir des communications cellulaires avec des terminaux mobiles présents dans chacune des cellules correspondantes. En particulier, la bande de fréquence d'origine est typiquement un spectre de fréquence tel que défini et géré par les normes LTE du 3GPP.

Par exemple, comme illustré à la Figure 1, les eNodeB 103 et 104 utilisent des interfaces radio LTE-Uu pour établir des liaisons de communication cellulaire avec l'ensemble des UEs qui sont présents dans la cellule qu'elles servent. Les terminaux présents dans les cellules respectivement associées aux différents eNodeB peuvent donc être des terminaux standards. Autrement dit, ce sont des terminaux qui ne nécessitent aucune capacité spécifique pour pouvoir être utilisés dans ce contexte. En particulier, ces terminaux peuvent donc avantageusement être entièrement compatibles avec les normes LTE du consortium 3GPP.

Additionnellement, les eNodeBs 103 et 104 sont adaptées pour utiliser des interfaces LTE-S1 afin de communiquer avec le cœur du réseau EPC. En alternative ou en complément, les eNodeBs 103 et 104 sont adaptées pour utiliser des interfaces LTE-X2 afin de permettre la communication entre lesdits eNodeBs. De manière avantageuse, les eNodeBs 103 et 104 sont adaptées pour utiliser des interfaces LTE-M1.

Dans le contexte d'usage qui est montré à la figure 1, toutefois, et qui est le contexte de la mise en œuvre du procédé selon l'invention, les deux structures mobiles 113 et 114 sont déconnectées de tout équipement du cœur de réseau EPC, en raison par exemple de leur éloignement d'un quelconque équipement de ce type, ou parce que le lien correspondant est rompu en raison d'une panne ou d'une destruction de quelque nature et que quelque origine que ce soit.

Les ePC locaux 105 et 106 compris dans chacune des stations de bases améliorées 101 et 102, respectivement, intègrent quant à eux toutes les fonctions connues liées au cœur d'un réseau mobile LTE. En particulier, ils intègrent des MMEs (de l'anglais « *Mobility Management Entity* »), des passerelles de service SGW (de l'anglais « *Serving Gateway* »), des passerelles de transport de données PGW (de l'anglais « *Packet Gateway* ») et une base de données de type HSS (de l'anglais « *Home Subscriber Server»)* qui contient la plupart des informations utiles qui sont relatives aux utilisateurs du réseau comme, par exemple, la localisation d'un utilisateur et/ou son identification/authentification. Ceci permet d'assurer l'interopérabilité avec des terminaux mobiles LTE standards.

Les entités de type RRCE 107 et 108, elles aussi comprises dans chacune des stations de bases améliorées 101 et 102, respectivement, gèrent et pilotent l'utilisation des ressources radios faites par chaque station de base. En particulier, dans des modes de mise en œuvre du procédé selon l'invention, ces entités exécutent au moins une partie des étapes du procédé. L'homme du métier appréciera que les entités 107 et 108 peuvent être des composantes d'une entité de commande fonctionnellement unique dont l'implémentation est distribuée dans les stations de bases améliorées 101 et 102, respectivement. Mais l'implémentation de leur fonction peut aussi être distribuée au sein de plusieurs équipements physiques, comme une pluralité de stations de base, et éventuellement des stations de base appartenant à des stations de base améliorées distinctes. L'invention n'entend pas être limitée par la forme de réalisation des moyens qui implémentent la fonction des RRCE 107 et 108.

Enfin, outre les entités déjà mentionnées dans ce qui précède qui sont intégrées aux stations de bases améliorées de chaque structure mobile, celles-ci intègrent aussi des équipements d'utilisateurs dédiés, ou IUE. Ces équipements IUE sont des entités de liaison 109, 110 dans le sens où ils permettent d'établir des liaisons de transport de données de type backhaul avec la station de base d'une structure mobile voisine. Dans l'exemple représenté à la figure 1, le IUE 109, qui appartient à la structure mobile 113, établit une liaison de transport de données de type backhaul avec la station de base 104 de la structure mobile 114. Réciproquement, le IUE 110, qui appartient à la structure 114, établit une liaison de transport de données de type backhaul avec la station de base 103 de la structure mobile 113. Lorsque le réseau comprend une pluralité de n structures mobiles ayant chacune une station de base, où n est un nombre strictement supérieur à 2, alors les stations de base évoluées de ces structures mobiles possèdent chacune n-1 entités de liaison IUE pour les relier aux n-1 autres stations de base, respectivement.

En outre, comme pour les liaisons de communication cellulaire entre les stations de base et les terminaux mobiles UEs situés dans la zone de couverture de la cellule correspondant à chacune de ces stations de base, respectivement, les liaisons de transport de données de type backhaul impliquant les entités de liaison IUE se font par l'intermédiaire de l'interface radio de type LTE-Uu. Ces liaisons sont établies, à l'origine, dans la bande de fréquence de la station de base améliorée définie et gérée pour chaque cellule selon les normes LTE du consortium 3GPP, ou plus généralement selon un codage de signaux numériques de type OFDM (pour « Orthogonal frequency-division multiplexing » en terminologie anglosaxonne) et dérivés (type OFDMA ou SC-FDMA - « Orthogonal Frequency-Division Multiple Access » et « single-carrier frequency division multiple access » en terminologie anglosaxonne) tels que 5G, wimax ou wifi.

Les liaisons de communication cellulaire et les liaisons de transport de données de type backhaul établies entre une station de base améliorée et des terminaux mobiles UEs et entre les stations de base améliorées, respectivement, permettent d'échanger des données par un protocole radio déterminé, à savoir le protocole de l'interface LTE-Uu dans l'exemple considéré ici. En particulier, grâce aux entités de liaisons IUE, ces liaisons permettent de relier les stations de base améliorées entre elles pour permettre l'échange de données sous protocole IP de manière à former un réseau de type backhaul.

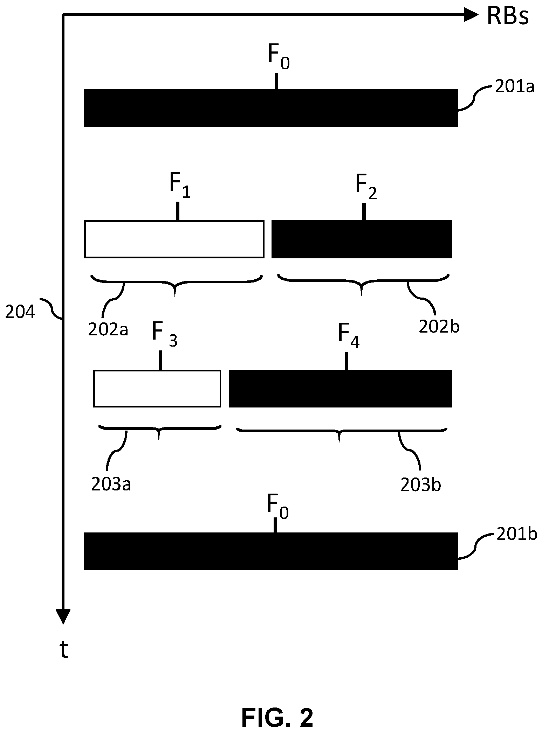

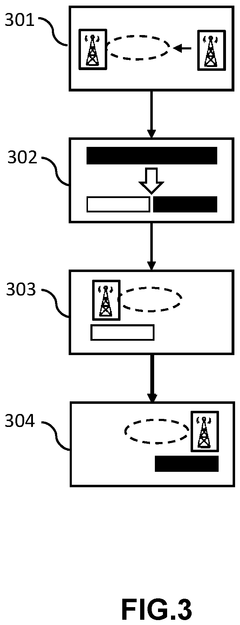

En référence à la **figure 2** et à la **figure 3**, il va maintenant être décrit des modes de mise en œuvre du procédé selon l'invention. Le procédé est mis en œuvre dans une station de base améliorée d'un système tel que celui qui est décrit plus haut en référence à la figure 1, par exemple la station de base améliorée 101. C'est un procédé avantageusement itératif, en ce sens qu'il est susceptible d'être exécuté à plusieurs reprises, successivement, à chaque fois qu'une condition de déclenchement du procédé est réalisée. Chaque itération a pour effet de reconfigurer le partage de la bande de fréquence de station de base améliorée 101 en sous-bandes de fréquence qui sont alors utilisées, comme il va être décrit, par la station de base améliorée 101 et par une (ou plusieurs) autre(s) station(s) de base améliorée(s) comme l'autre station de base améliorée 102, respectivement.

On notera tout d'abord qu'un procédé selon l'invention est adapté à différents type de liaisons de communication cellulaire entre station de base et terminaux de communication mobiles. Un procédé selon l'invention peut avantageusement être mis en œuvre avec des liaisons de communication conformes à un codage de type OFDM. L'invention sera décrite dans un contexte de liaisons de communication répondant au standard LTE.

Considérant le standard LTE, il regroupe un bloc de données à transmettre en 12 bandes de 15 kHz (selon la technique de modulation OFDM). Un bloc élémentaire en LTE utilise donc un spectre de 12x15 kHz = 180 kHz. On appelle « Bloc Ressource » ou RB, les 12 bandes de 15 kHz transportant le bloc de données.

Ensuite, on notera qu'une trame LTE dure 10 ms. Elle est découpée en 10 sous-trames d'une durée de 1 ms chacune. Chaque sous-trame est divisée en deux slots de 0,5ms. Un slot dure donc 0,5 ms, durée pendant laquelle 7 symboles sont transmis par bande OFDM. Or, dans la mesure où il y a 12 bandes OFDM, cela fait que 84 symboles (7 symboles fois 12 bandes sont transmis en 0,5 ms. En outre, 1 symbole peut transmette de 1 bit à 6 bits, selon la modulation choisie (de la modulation QPSK à la modulation 128 QAM).

Enfin, le standard LTE permet d'exploiter des largeurs de bande de 1,4 MHz, 3 MHz, 5 MHz, 10 MHz, 15 MHz et 20 MHz. Une Ressource Bloc (RB) correspondant à une bande de 180 kHz, il s'ensuit que si la communication utilise :
- une bande de 1,4 MHz, alors 6 RB peuvent être exploitées ;
- une bande de 3 MHz, alors 15 RB peuvent être exploitées ;
- une bande de 5 MHz, alors 25 RB peuvent être exploitées ;
- une bande de 10 MHz, alors 50 RB peuvent être exploitées ;
- une bande de 15 MHz, alors 75 RB peuvent être exploitées ; ou,
- une bande de 20 MHz, alors 100 RB peuvent être exploitées

Ainsi, si la station de base dispose d'une bande de fréquence de 15 MHz de large, alors elle possède 75 RB, et elle peut donc transmettre jusqu'à 75x84 symboles de 6 bits en 0,5 ms. Autrement dit, 37800 bits sont transmis en 0,5 ms, c'est-à-dire que le débit binaire est égal à 75,6 Mbits/s. Si la station de base dispose d'une bande de fréquence de 10 MHz de large, elle possède 50 RB, et peut donc transmettre 50x84 symboles de 6 bits en 0,5 ms. Autrement dit, 25200 bits sont transmis en 0,5 ms, soit un débit binaire égal à 50,4 Mbits/s. Et ainsi de suite pour les autres largeurs de spectre des bandes de fréquence normalisées selon le standard LTE (à savoir 5 MHz, 3 MHz et 1,4 MHz).

Dans des modes de mises en œuvre du procédé selon l'invention, le découpage par les entités RRCE de la bande de fréquence correspondant à la bande LTE originellement allouée à une station de base en sous-bandes de fréquences correspondant à des largeurs de bandes normalisées selon le standard LTE, tient compte du débit estimé pour les différentes liaisons de communication cellulaire et de liaisons de données de type backhaul, afin de répartir les RB de façon éventuellement inéquitables entre les différentes stations de base concernées, en découpant la bande de fréquence en sous-bandes de fréquence de largeurs respectives éventuellement différentes.

Avant la première itération du procédé, la station de base 103 de la station de base améliorée 101 est susceptible d'avoir établi des liaisons de communications cellulaire via son interface radio LTE-Uu avec un ou plusieurs terminaux mobiles UEs 111 situés dans la cellule mobile correspondante. Autrement dit, elle peut être en train d'échanger des données avec les terminaux UEs 111 qui sont dans une zone géographique située dans un environnement relativement proche de la structure mobile à laquelle elle appartient, à portée radio de la station de base 103. De plus, conformément à la description donnée plus haut en référence à la figure 1, la station de base améliorée 101 considérée comprend aussi une entité de liaison 109 qui a la capacité d'établir des liaisons transport de données de type backhaul avec les stations de base d'autres structures mobiles. Enfin, toutes les communications cellulaires établies par la station de base 103 se font dans la bande de fréquence déterminée, représentée en haut de la figure 2 sous la référence 201a, qui est la bande de fréquence attribuée à l'origine à la station de base 103 selon le dimensionnement du système et en accord avec les normes LTE. La bande de fréquence 201a est définie à la fois par sa fréquence centrale F₀ et par sa largeur spectrale. Cette largeur spectrale est typiquement de plusieurs Mégahertz, par exemple, 1,4 Hz, 3 MHz, 5 MHz, 10 MHz, 15 MHz ou 20 MHz pour les bandes de fréquences normalisées selon le standard LTE.

Dans une première étape 301 du procédé, l'entité de commande 107 associée à la station de base 103 de la station de base améliorée 101 détecte un évènement extérieur qui est indicatif de la présence d'une seconde station de base améliorée dans son environnement immédiat, à savoir l'autre station de base améliorée 102 dans l'exemple considéré ici en référence au système de la figure 1.

La détection de l'autre station de base améliorée 102 peut être par exemple réalisée par l'intermédiaire d'un scanner radio de la structure mobile 113 ou de la station de base améliorée 101. Une telle station de base améliorée 101 peut ainsi comprendre un scanner radio embarqué ayant des moyens de mesure d'un signal radiofréquence émis dans un spectre de fréquence déterminé, par au moins une autre station de base améliorée située à portée dudit scanner radio de la station de base améliorée, et étant configuré pour déterminer, sur la base de propriétés physiques du signal radiofréquence mesuré, des informations associées à l'utilisation du spectre de fréquence déterminé, pour des transmissions radio, émises par l'autre station de base améliorée.

Il est ainsi possible de détecter la présence d'une autre station de base améliorée, ou encore de déterminer la distance de séparation avec cette autre station de base améliorée, de déterminer aussi les ressources radio fréquentielles utilisées par tous les équipements radio situés à portée du scanner radio de la station de base améliorée et enfin, d'identifier, le cas échéant, une autre station de base améliorée avec laquelle une liaison de transport de données de type backhaul est susceptible d'être établie.

Avantageusement, une station de base améliorée, équipée d'un scanner radio, est capable de déterminer qu'une autre station de base améliorée, avec laquelle elle pourrait établir une liaison de transport de données, se trouve ou non à portée de ses propres équipements radio. Autrement dit, la station de base améliorée dispose de moyens lui permettant de savoir si une autre station de base améliorée entre ou sort d'une zone, qui est située à portée du scanner radio, et dans laquelle ladite autre station de base améliorée est éligible à l'établissement d'une liaison de transport de données de type backhaul.

En outre, de façon préférée, la station de base améliorée qui établit une liaison de transport de données peut également déterminer si l'autre station de base améliorée avec laquelle elle établit cette liaison s'éloigne d'elle, se rapproche d'elle ou reste à distance constante. Ceci permet, d'une part, que la mise en place de la liaison de transport de données soit optimisée compte-tenu de cette distance et, d'autre part, que les paramètres de cette liaison (comme la puissance radio) soient adaptés à la distance qui sépare réellement la str station de base améliorée de l'autre station de base améliorée.

En outre, lorsqu'une autre station de base améliorée susceptible d'établir une telle liaison est détectée à portée radio de la station de base améliorée, un scanner radio équipant une station de base améliorée peut être configuré pour identifier cette autre station de base améliorée. L'identification peut alors conditionner tout établissement d'une liaison de transport de données de type backhaul entre les deux. Par exemple, en fonction du fait que l'autre station de base améliorée soit une structure amie, extérieure ou neutre, l'établissement d'une liaison de transport de données de type backhaul peut être souhaitable ou non.

Enfin, l'utilisation d'un tel scanner radio permet de prendre en compte des informations qui sont importantes pour l'établissement d'une liaison de transport de données de type backhaul performante, à savoir des informations relatives à l'utilisation qui est faite du spectre de fréquence par les différents équipements radios qui sont présents dans l'environnement immédiat de la station de base améliorée. En effet, les communications d'une station de base avec les terminaux mobiles de sa cellule sont réalisées dans un spectre de fréquence déterminé. Ce spectre de fréquence, typiquement une bande de fréquence normalisée selon la norme LTE du consortium 3GPP, est composée d'au moins une bande de fréquence ayant une fréquence centrale et une largeur spectrale déterminées. Dès lors que ce spectre de fréquence est utilisé pour plusieurs communications en même temps, il devient nécessaire de répartir au mieux les fréquences utiles disponibles entre les différentes communications afin d'optimiser les performances de chacune d'elle et éviter ou limiter la survenue d'interférences. Or, ce spectre de fréquence peut être utilisé pour les communications de chaque station de base de chaque station de base améliorée avec les terminaux de sa cellule et aussi pour l'établissement d'une liaison de transport de données de type backhaul entre plusieurs stations de base améliorées.

Dit autrement, un fonctionnement optimal d'une liaison de ce type implique une répartition optimisée des ressources radio utilisées par tous les équipements radio à portée radio de la station de base améliorée. Or, une répartition optimisée repose sur une connaissance précise de l'utilisation du spectre de fréquence faite par tous les équipements radio à portée radio de la station de base améliorée et susceptibles d'utiliser tout ou partie de ce spectre. L'utilisation d'un scanner radio permet donc à une entité de commande de gérer l'utilisation (notamment l'allocation) des ressources radio dans le spectre sur la base des informations obtenues grâce audit scanner radio.

Enfin, dans un mode de mise en œuvre non-limitatif, l'entité de commande peut être l'entité 107 du type RRCE de la station de base améliorée 101 de la structure mobile 113 considérée. Plus généralement, il peut s'agir de toute entité permettant la gestion des ressources radio utilisées par une station de base à laquelle elle est associée. A cet effet, cette entité de commande reçoit continuellement des informations (i.e., des données) en provenance d'équipements de la structure mobile à laquelle elle appartient et sur la base desquelles elle peut valider ou non la détection d'un évènement extérieur particulier.

Lors d'une deuxième étape 302 du procédé, l'entité de commande 107 analyse l'événement extérieur détecté. En particulier, sur la base des informations récupérées lors de la détection de cet événement, l'entité de commande 107 sélectionne une sous-bande de fréquence de la bande de fréquence que la station de base devra seulement utiliser pour ses communications cellulaires, afin de libérer une autre sous-bande de fréquence qui sera utilisée pour établir une liaison de type backhaul avec la station de base 104 de l'autre station de base améliorée 102 via le terminal de liaison IUE 109 de la station de base améliorée 101 considérée. Le cas échéant, l'entité de commande 107 cause le basculement des liaisons de communications cellulaire de la station de base depuis les ressources radio utilisées dans la bande de fréquence 201a de la station de base 103, vers les ressources radio disponibles dans une sous-bande seulement de cette bande de fréquence 201a. Elle peut s'appuyer pour cela par exemple, sur l'information de la distance qui la sépare de l'autre structure ou des moyens de communications que celle-ci comprend. Plus précisément, la configuration du spectre utile porte sur la division éventuelle de la bande de fréquence 201a utilisée par la station de base 103 pour n'en utiliser qu'une partie (i.e. une sous bande), afin de permettre l'utilisation de l'autre sous-bande par la station de base 104 de l'autre station de base améliorée 102 qui a été détectée à l'étape 301. Le basculement peut avantageusement intégrer une opération de détachement pour cause de ré-attachement de façon à éviter de perdre les terminaux. En effet, un basculement sans action préalable vers les terminaux mobiles peut ne pas fonctionner comme attendu.

En outre, conformément à l'exemple de système représenté à la figure 1, l'autre station de base améliorée 102 détectée à l'étape 301 comprend elle aussi une entité de liaison IUE 110 qui peut établir des liaisons de transport de données de type backhaul avec les stations de base d'autres station de base améliorées, et notamment avec la station de base 103 de la station de base améliorée 101.

Lors d'une troisième étape 303, une liaison de transport de données de type backhaul est établie entre l'entité de liaison 109 de la station de base améliorée 101 et la station de base 104 de l'autre station de base améliorée 102 qui a été détectée à l'étape 301. Alternativement et de façon préférée, une liaison de transport de données de type backhaul est établie entre la station de base 103 de la station de base améliorée 101 et l'entité de liaison 110 de l'autre station de base améliorée 102 qui a été détectée à l'étape 301. Comme il a déjà été évoqué, cette liaison de type backhaul se fait par l'intermédiaire de l'interface radio. Elle permet les échanges de données par protocole IP entre les deux stations de base améliorées 101 et 102 impliquées, pour pallier l'absence de connexion de ces deux stations de base 103 et 104 à tout équipement du cœur de réseau EPC. Concomitamment à cette action, il est opéré un basculement des fréquences radio supportant les liaisons de communication cellulaires établies par la station de base 103 de la station de base améliorée 101. En particulier, ces liaisons de communication cellulaire sont basculées sur des ressources radio dans une première sous-bande de fréquence différente de la bande de fréquence d'origine 201a. Par exemple, dans la sous-bande de fréquence 202a telle qu'elle est représentée à la figure 2. Par sous-bande de fréquence on entend une bande de fréquence qui est une partie, de préférence homogène, de la bande de fréquence totale 201a qui a été utilisée tout entière pour l'établissement des liaisons de communication cellulaire préalablement à la détection 301 de l'événement ayant lancé la mise en œuvre d'une itération du procédé.

Enfin, lors d'une dernière étape 304, une liaison de transport de données de type backhaul est établie entre la station de base 103 de la station de base améliorée 101 et l'entité de liaison 110 de l'autre station de base améliorée 102. Alternativement et de façon préférée, une liaison de transport de données de type backhaul est établie entre l'entité de liaison 109 de la station de base améliorée 101 et la station de base 104 de l'autre station de base améliorée 102. De la même façon, cette liaison se fait par l'intermédiaire d'une interface radio LTE-Uu et permet, elle aussi, les échanges de données par protocole IP entre les deux stations de base améliorées. Concomitamment à cette action, il est opéré un basculement des fréquences radio supportant les liaisons de communication cellulaires établies par la station de base 104 de l'autre station de base améliorée dans une autre sous-bande de fréquence différente de la bande de fréquence d'origine. En particulier, ces liaisons de communication cellulaire sont basculées dans une seconde sous-bande de fréquence de la bande de fréquence d'origine qui est contiguë à et complémentaire de la première sous-bande de fréquence utilisée à l'étape 303 du procédé. Par exemple, dans la sous-bande de fréquence 202b telle qu'elle est représentée à la figure 2.

En particulier, la première sous-bande de fréquence 202a,203a est associée à la station de base améliorée 101 tandis que la seconde sous-bande de fréquence 202b,203b étant associée à ladite autre station de base améliorée 102. En outre, la première sous-bande de fréquence 202a,203a et la seconde sous-bande de fréquence 202b,203b sont situées dans la première bande de fréquence déterminée.

Par ailleurs, la division de la bande de fréquence originale en deux sous-bandes découle du fait que, dans l'exemple décrit ci-dessus en référence aux figures, deux stations de base améliorées seulement sont concernées par les liaisons de transport de données de type backhaul. Toutefois, comme il a déjà été évoqué, la bande de fréquence peut être divisée en un nombre plus élevé de sous-bandes dans le cas d'établissement de liaisons de transport de données de type backhaul concernant un plus grand nombre de stations de base améliorées. A titre d'exemple non limitatif, dans le cas d'un véhicule, tel qu'un navire, établissant des liaisons de communication avec d'autres structures (e.g. navires), celui-ci pourrait établir au moins trois, de préférence au moins quatre, liaisons de transport de données de type backhaul inter-structures au total.

En outre, les sous-bandes de fréquence allouées à chaque station de base peuvent avoir des fréquences centrales et des largeurs spectrales variables, et ajustables dynamiquement. En effet, le procédé s'exécute de manière continue, en ce sens que chaque nouvel évènement extérieur détecté cause le lancement d'une nouvelle itération du procédé, c'est-à-dire une reconfiguration de partage de la bande de fréquence 201a. Chaque itération peut ainsi entraîner une modification de la répartition de la bande de fréquence originale 201a entre différentes sous-bandes de fréquence. Plus précisément, à chaque détection d'un nouvel évènement extérieur, l'entité de commande peut commander le basculement de toutes les liaisons de communication cellulaire vers de nouvelles sous-bandes de fréquence. Par exemple, si une nouvelle station de base améliorée supplémentaire intègre l'environnement immédiat des deux stations de base améliorées ayant déjà une liaison de transport de données de type backhaul, cela peut entraîner la production d'un nouvel évènement extérieur indicatif de la présence d'une station de base améliorée additionnelle dans la zone. Le cas échéant, cela cause le redécoupage de la bande de fréquence d'origine en de nouvelles sous-bandes, en nombre supérieur (a *priori* en nombre augmenté d'une unité, pour l'entrée d'une station de base améliorée de plus dans la zone). Inversement, si une station de base améliorée sort de la zone de couverture radio, si bien qu'il n'est plus possible d'entretenir la liaison de transporte de données de type backhaul avec sa station de base et si bien que le risque d'interférences disparaît, alors le découpage de la bande de fréquence est révisé, pour donner lieu à une découpage en un nombre de sous-bandes de fréquence réduit d'une unité. Dans les deux cas (augmentation ou réduction du nombre de sous-bandes) les nouvelles sous-bandes de fréquence sont à utiliser par chacune des stations de base de différentes stations de base améliorées qui sont désormais impliquées, pour leurs liaisons de communication cellulaires et pour leurs liaisons de transport de données de type backhaul aves une entité de liaison d'une autre station de base améliorée.

Dans un mode de réalisation particulier, un redécoupage de la bande de fréquence d'origine peut être causé, même en l'absence de détection d'un évènement extérieur indicatif de l'arrivée d'une station de base améliorée additionnelle ou au contraire du départ d'une des stations de base améliorées impliquées dans le partage du spectre à l'instant t. Ceci peut arriver, par exemple, si les ressources radio requises par les différentes stations de base améliorées du système varient à un instant donné, si bien que la répartition des ressources radio entre les stations de base concernées se révèlent non-optimale, voire affecte la qualité de service (QoS) pour une station de base au moins.

Dans des modes de mises en œuvre, le basculement par une station de base des liaisons de communication cellulaire antérieurement établies dans la bande de fréquence utilisée à l'origine, dans la sous-bande de fréquence désormais associée à ladite station de base peut consister à exécuter les étapes de :
- blocage, par la station de base, d'un canal d'accès aléatoire de type PRACH (de l'anglais *« Physical Random Access Channel* »), afin d'empêcher provisoirement la réception de requêtes en allocation de ressources radio en provenance des terminaux de communication mobiles ayant une liaison de communication cellulaire avec ladite station de base ;
- détachement des terminaux de communication mobiles et des entités de liaison ayant une liaison de communication cellulaire avec la station de base, de la bande de fréquence utilisée par ladite station de base pour ses liaisons de communication cellulaire ;
- reconfiguration des ressources radio disponibles par la station de base dans la sous-bande de fréquence ; et,
- déblocage du canal PRACH par la station de base, ce qui permet le ré-attachement naturel des terminaux de communication mobiles qui demandent et obtiennent l'établissement d'une nouvelle une liaison de communication cellulaire avec la station de base, dans la sous-bande de fréquence nouvellement allouée à ladite station de base.

Concernant le blocage d'un canal d'accès aléatoire de type PRACH, celui-ci peut être exécuté de plusieurs façons. Le blocage peut par exemple comporter un arrêt de gestion des RACH en local sur la station de base. Cela conduirait à un rejet temporaire de toute demande.

De façon préférée, il peut comporter le blocage de l'accès à la cellule signalée sur les informations système de la cellule, le temps d'effectuer la reconfiguration. Cette procédure peut être appelée « Barring Cell » en terminologie anglo-saxonne. Ainsi, aucun terminal ne peut alors tenter de joindre le PRACH. L'utilisation dans ce contexte particulier d'une telle procédure peut permettre de limiter la surcharge du système inutilement et augmente l'autonomie des terminaux.

En outre, avantageusement, dans le cadre d'un blocage de l'accès à la cellule, le procédé peut comporter une prise en compte des classes de terminaux. Les classes de terminaux se réfèrent en particulier aux AC (« Access class » en terminologie anglosaxonne) configurés dans la SIM de chaque terminal. Dans ce contexte, le procédé peut comporter, lors de l'étape de déblocage du canal PRACH, le déblocage que d'une partie des classes de terminaux de façon à faire par exemple un déblocage graduel et ainsi éviter de congestionner le système.

De plus, un système de gestion de priorité peut être implémenté au sein des différentes entités de commande RRCE appartenant à différentes stations de base améliorées pour déterminer, dans chaque cas particulier, quelle entité de commande exécute les étapes du procédé. Dit autrement, une telle gestion de priorité permet qu'une seule entité de commande RRCE sélectionne les sous-bandes de fréquence que toutes les stations de base des différentes stations de base améliorées impliquées utilisent pour leurs communications (cellulaires et de type backhaul) respectives.

La **figure 2** illustre un exemple d'évolution dynamique des sous-bandes de fréquence d'une bande de fréquence originale 201a qui sont utilisées par les deux stations de base 103 et 104 des structures mobiles 113 et 114 respectivement, afin d'établir les liaisons de transport de données selon des modes de mise en œuvre de l'invention. Dans la description de cette figures 2, les structures mobiles 113 et 114 seront décrites mais leurs caractéristiques pourront s'appliquer aux stations de base améliorées quelles comportent.

Dans l'exemple, la bande de fréquence originale 201a présente une largeur spectrale déterminée et est centrée sur une fréquence F₀. La flèche 204 symbolise l'axe des temps. Ainsi, dans un premier temps, suite à une première détection d'un évènement extérieur indiquant la présence de la seconde structure mobile 114 dans l'environnement immédiat de la structure mobile 113, c'est-à-dire la présence de la station de base 104 dans la zone de portée radio de la station de base 103, alors la bande de fréquence originale 201a est divisée en deux sous bandes de fréquence 202a et 202b respectivement centrées sur des fréquences F₁ et F₂. La sous-bande 202a est attribuée à la station 103, et la sous-bande 202b est attribuée à la station de base 104, par exemple.

Ensuite, dans un second temps, suite à l'évolution des besoins de débit binaire par chacune des deux stations de base 103 et 104, la répartition du spectre est modifiée, toujours par découpage en deux sous-bandes, mais cette-fois-ci avec une autre répartition. Dans l'exemple représenté, la division de la bande de fréquence originale 201a est effectuée en deux sous bandes de fréquence 203a et 203b respectivement centrées sur les fréquences F₃ et F₄. Enfin, suite à la détection de la sortie de la station de base 104 de la zone de couverture radio de la station de base 103, l'entité de commande en charge sélectionne à nouveau la bande de fréquence originale 201b pour l'attribuer à toutes les liaisons de communication cellulaire de la station de base. Par exemple, consécutivement à la disparation d'une structure mobile sur le radar de l'autre structure mobile, les liaisons inter-structures sont perdues, l'entité de commande réaffecte alors l'intégralité de la bande de fréquence originale 201b à la station de base 103 de la structure mobile 113 afin qu'elle puisse l'utiliser toute entière.

L'homme du métier appréciera qu'il s'agit ici d'exemples schématiques et non-limitatifs. En pratique, la répartition des différentes sous-bande de fréquence peut suivre une évolution dans le temps spécifique à chaque cas d'établissement ou de fermeture de liaisons de transport de données de type backhaul entre des structures mobiles. Ainsi, grâce à la capacité du procédé à faire évoluer la répartition des sous-bandes de fréquence de manière dynamique il est possible d'ajuster plus ou moins en temps réel les capacités d'une ou plusieurs liaison(s) de communication cellulaire aux besoins réels associés à ces liaisons. Un réseau de type backhaul entre plusieurs stations de base (par exemple selon une topologie maillée) peut être établi et peut utiliser des ressources radio (RB) optimisant ses performances tout en évitant la survenue d'interférences entre les différentes liaisons (de communication cellulaire et de transport de données de type backhaul) existantes.

Par exemple, dans des modes de mise en œuvre distincts du procédé, la largeur de la bande de fréquence originale peut être de 5MHz et elle peut être divisée en sous bande de fréquence réparties entre les deux stations de base respectives de deux structures mobiles selon une répartition d'environ 3 MHz pour une structure mobile et d'environ 1,4 MHz pour l'autre structure mobile. Dit autrement, dans cet exemple :
n est égal à 2 ;
X₀ est égale à 5 MHz ; et,
X₁ est égal à 3 MHz environ ; et,
X₂ est égal à 1,4 MHz environ.

Dans une variante, la bande X₀ ci-dessus peut être divisée en sous-bandes de fréquence réparties entre les trois stations de base respectives de trois structures mobiles selon une répartition d'environ 1,4MHz pour chaque station de base. Dit autrement, dans cet exemple :
n est égal à 3 ;
X₀ est égale à 5 MHz ; et,
X₁ X₂ et X₃ sont égaux à 1,4 MHz.

Dans d'autres modes de mise en œuvre du procédé, la largeur de la bande de fréquence originale peut être de 10 MHz et elle peut être divisée en sous-bandes de fréquence réparties entre les deux stations de base respectives de deux structures mobiles selon une répartition de 5 MHz pour chaque structure mobile. Dit autrement, dans cet exemple :
n est égal à 2 ;
X₀ est égale à 10 MHz ; et,
X₁ et X₂ sont égaux à 5 MHz environ.

Et dans une variante, la bande Xₒ ci-dessus peut être divisée en sous-bandes de fréquence réparties entre les stations de base respectives de trois structures mobiles, selon une répartition d'environ 3 MHz pour chaque station de base, c'est-à-dire que :
n est égal à 3 ;
X₀ est égale à 10 MHz ; et,
X₁ X₂ et X₃ sont égaux à 3 MHz, ou alternativement X₁ X₂ et X₃ sont égaux à 5 MHz, 3 MHz, et 1,4 MHz respectivement.

D'une manière générale, le découpage en sous-bandes de fréquence de la bande de fréquence d'origine 201a peut s'opérer de différentes façons. Par exemple, il peut consister en une répartition volontairement inéquitable du type deux tiers de la bande de fréquence pour une station de base et un tiers pour l'autre.

Le découpage en sous-bandes de fréquence peut consister en une réparation équitable consistant simplement à sous-diviser la bande de fréquence d'origine en n sous-bandes où n est le nombre de stations de base établissant des liaisons de transport de données de type backhaul. Par exemple, si la bande de fréquence d'origine est centrée sur une fréquence centrale F₀ et a une largeur spectrale de X₀ mégahertz, et l'étape de sélection des sous-bandes de fréquence peut comprendre la sélection de n sous-bandes centrées sur une fréquence F₁, F₂, ... Fₙ, respectivement, et ayant une largeur spectrale X₁, X₂, ... Xₙ respectivement, où X₁+X₂+... + Xₙ ≤ X₀.

Ainsi, il est possible d'optimiser la répartition des ressources dédiées aux liaisons de transport de données de type backhaul sans créer d'interférence supplémentaire et d'optimiser la répartition des sous-bandes de fréquences pour éviter les interférences entre différentes cellules. En outre, la répartition des sous-bandes peut aussi tenir compte des différents secteurs antennaires associés à chaque station de base là encore pour minimiser les interférences.

En outre, il est courant pour une station de base, qu'elle soit mobile ou non, de comporter un système antennaire avec plusieurs antennes d'émission/réception de signaux radiofréquence. Chacune, ou un groupe parmi l'ensemble des antennes de la station de base formant son système antennaire peut desservir une zone de couverture radio, appelée cellule, qui lui est propre. De plus, les antennes d'un tel système antennaire étant des antennes directives, leurs zones de couverture radio respectives sont des subdivisions de la zone de couverture radio totale de la station de base. Plus particulièrement, ces subdivisions sont des secteurs angulaires de la zone de couverture radio totale de la station de base. On parle alors de système antennaire multi-secteur, chaque secteur antennaire correspond à un secteur angulaire déterminé, et étant desservi par une antenne respective ou un groupe d'antennes respectif du système antennaire. Chaque secteur antennaire utilisant des ressources radio propres ou communes à au moins un autre secteur angulaire du même nœud, notamment une ou plusieurs bandes de fréquence définie chacune par une fréquence centrale et une largeur de bande, un secteur antennaire définit une cellule au sens radio. De plus, lorsque l'établissement d'une liaison de transport de données de type backhaul est réalisé entre la station de base d'une structure mobile et un équipement utilisateur dédié d'une autre structure mobile, ladite liaison se fait plus particulièrement entre l'équipement utilisateur dédié de l'autre structure mobile d'une part, et l'antenne du système antennaire de la station de base qui couvre le secteur angulaire précis dans lequel il se trouve, d'autre part. Ainsi, dans le cadre de la présente invention, il est possible que la sélection, sur la base de l'événement extérieur détecté et analysé, de sous-bandes de fréquence à l'intérieur de la première bande de fréquence déterminée se fasse pour chacun des secteurs antennaires.

Dans un autre mode de mise en œuvre particulier, la sélection des sous-bandes de fréquence opérée par l'entité de commande est adaptée pour garantir une qualité de service (QoS, de l'anglais « *Quality of Service* ») minimum aux entités de liaisons des différentes structures mobiles impliquées. Dit autrement, l'entité de commande peut être configurée pour adapter la composition des sous-bandes de fréquence aux besoins réels de chacune liaisons de transport de données de type backhaul. Le cas échéant, cela est réalisé en provoquant un redécoupage de la bande de fréquence 201a en modifiant la largeur respective des sous-bandes, et en modifiant corrélativement leur fréquence centrale. En particulier, pour garantir un débit déterminé à une liaison de transport de données spécifique. On parle aussi d'un certain niveau de GBR (de l'anglais « *Guaranteed Bit Rate* ») associé à une liaison de transport de données, il est notamment possible de diviser le spectre de façon asymétrique tout en conservant un débit identique entre les sous-bandes. A titre d'exemple non limitatif, une bande de fréquence de 5 MHz peut être divisée en deux sous-bandes de 3MHz et 1,4MHZ, pour lesquelles les débits dans le spectre 1,4MHZ et 3MHz sont équivalents pour les liaisons de transport de données de préférence sous protocole IP. Ainsi, les capacités d'une liaison peuvent être adaptées au volume de données effectivement transporté par cette liaison.

Enfin, l'homme du métier appréciera qu'un avantage du fait que les liaisons de communication cellulaire soient établies pour toutes les stations de base des structures mobiles respectives par l'intermédiaire de l'interface radio LTE-Uu, est la possibilité d'utiliser un mode de diffusion simultanée d'un même contenu (en anglais « *Simulcast* ») sur deux fréquences distinctes ou sur une seule fréquence en utilisant deux types de modulation. Ceci permet par exemple de diffuser des alertes de sécurité à l'ensemble des terminaux mobiles présents dans la pluralité de cellules mobiles servies par les stations de base des structures mobiles respectives qui partagent l'interface LTE-Uu, quel que soit le format de modulation qu'ils supportent. Des modes de mise en œuvre peuvent s'appuyer une technologie de diffusion existante comme par exemple eMBMS (de l'anglais « *Evolved Multimedia Broadcast Multicast Services »,* aussi appelé *« LTE Broadcast* »). Les formats de modulation du signal qui peuvent être utilisés comprennent par exemple l'OFDMA (de l'anglais « *Orthogonal Frequency-Division Multiple Access* ») et le SC-FMDA (de l'anglais « *Single-Carrier Frequency Division Multiple Access* »)*.* Ces exemples ne sont pas limitatifs. Le format de modulation peut aussi combiner un format de modulation par division de fréquence (FDD, de l'anglais « *Frequency Division Duplexing* ») avec un format de modulation par division de temps (TDD, de l'anglais « *Time Division Duplexing »).*

Par extension, la diffusion en mode multicast de messages ou d'autres informations ou données, peut être réalisée en simultané sur un groupe de fréquences, éventuellement non contigües, parmi les fréquences centrales des sous-bandes créées, selon les types de terminaux mobiles présents dans les cellules mobiles correspondantes des structures mobiles respectives.

## Revendications

1. Procédé d'établissement d'une liaison de transport de données sous protocole IP entre au moins deux stations de base améliorées (101,102) pour des structures mobiles respectives, lesdites stations de base améliorées ayant chacune au moins une station de base (103, 104) qui est adaptée pour établir des liaisons de communication cellulaire avec des terminaux de communication mobiles (111, 112) via une interface radio déterminée (LTE-Uu) dans une première bande de fréquence (201a) déterminée, chaque station de base améliorée (101,102) comprenant en outre une entité de liaison (109, 110) configurée pour établir une liaison de transport de données de type backhaul via ladite interface radio déterminée (LTE-Uu), dans ladite première bande de fréquence déterminée, avec une station de base (104, 103) de l'autre station de base améliorée (101, 102), le procédé comprenant les étapes suivantes mises en œuvre au sein de l'une desdites stations de base améliorées (101) :
- détection (301), par une entité de commande (107) associée à la station de base de la station de base améliorée (101), d'un évènement extérieur indicatif de la présence d'une autre station de base améliorée (102) dans l'environnement immédiat de ladite station de base améliorée (101) ;
- analyse (302), par l'entité de commande de la station de base améliorée (101), de l'événement extérieur détecté et sélection, sur la base de l'événement extérieur détecté et analysé, de sous-bandes de fréquence à l'intérieur de la première bande de fréquence déterminée ;
- établissement (303) d'une liaison de transport de données de type backhaul via l'interface radio déterminée (LTE-Uu) entre la station de base de la station de base améliorée (101) et l'entité de liaison de l'autre station de base améliorée (102) dans une première sous-bande de fréquence (202a,203a) et basculement de toutes les liaisons de communication cellulaire établies par la station de base de la station de base améliorée (101) dans ladite première sous-bande de fréquence ; et,
- établissement (304) d'une liaison de transport de données de type backhaul via l'interface radio déterminée (LTE-Uu) entre une station de base de l'autre station de base améliorée (102) et l'entité de liaison de la station de base améliorée (101) dans une seconde sous-bande de fréquence (202b,203b) et basculement de toutes les liaisons de communication cellulaire établies par la station de base de l'autre station de base améliorée (102) dans ladite seconde sous-bande de fréquence,
et dans lequel les étapes d'analyse, de sélection, d'établissement et de basculement sont répétées à chaque fois qu'un nouvel évènement extérieur est détecté.

2. Procédé selon la revendication 1 dans lequel, en cas de détection d'un nouvel évènement indicatif de la présence d'une n^{ième} autre stations de base améliorées dans l'environnement immédiat de la station de base améliorée, l'étape de sélection comprend la sélection de n+1 sous-bandes de fréquences associées aux n+1 stations de base améliorées, et dans lequel n liaisons de transport de données de type backhaul sont établies entre chaque station de base améliorée et une station de base respective de chacune des n autres station de base améliorée par l'intermédiaire, respectivement, de n entités de liaison de ladite station de base améliorée.

3. Procédé selon la revendication 1 ou la revendication 2 dans lequel, les liaisons de communication cellulaire répondent à un codage OFDM ou un codage dérivé tel que OFDMA ou SC-FDMA.

4. Procédé selon la revendication 1 ou la revendication 2 dans lequel, les sous-bandes de la bande de fréquence qui sont sélectionnées à l'étape de sélection sont des bandes de fréquence qui sont contigües deux-à-deux et complémentaires entre elles dans ladite bande de fréquence.

5. Procédé selon l'une quelconque des revendications précédentes, dans lequel la bande de fréquence déterminée est centrée sur une fréquence centrale F₀ et a une largeur spectrale de X₀ mégahertz, et dans lequel l'étape de sélection comprend la sélection de n sous-bandes centrées chacune sur une fréquence F₁, F2,... Fn, respectivement, et ayant une largeur spectrale X₁, X₂,... Xₙ respectivement, où X₁+X₂+... + Xₙ est inférieur ou égale à X₀.

6. Procédé selon l'une quelconque des revendications précédentes, **caractérisé en ce que** la largeur des sous bandes est sélectionnée parmi : 1,4 MHz, 3 MHz, 5 MHz, 10 MHz, 15 MHz et 20 MHz.

7. Procédé selon l'une quelconque des revendications précédentes, dans lequel un évènement extérieur indicatif de la présence d'une autre station de base améliorée dans l'environnement immédiat de la station de base améliorée est un évènement détecté automatiquement par des équipements de la station de base améliorée et est compris dans la liste comprenant : la détection de l'autre station de base améliorée par un radar, ou la détection de l'autre station de base améliorée par un scanner radio.

8. Procédé selon l'une quelconque des revendications précédentes dans lequel un évènement extérieur indicatif de la présence d'une autre station de base améliorée dans l'environnement immédiat de la station de base améliorée est un évènement détecté par l'observation directe de l'autre station de base améliorée par un opérateur.

9. Procédé selon l'une quelconque des revendications précédentes, dans lequel le basculement dans une sous-bande de fréquence déterminée des liaisons de communication cellulaire établies par la station de base de la station de base améliorée comprend les étapes de :
- blocage, par la station de base, d'un canal physique d'accès aléatoire (PRACH) en provenance des terminaux de communication mobiles ayant une liaison de communication cellulaire avec ladite station de base ;
- détachement des terminaux de communication mobiles ayant une liaison de communication cellulaire avec la station de base, de la bande de fréquence utilisée par ladite station de base pour ses liaisons de communication cellulaire ;
- reconfiguration des ressources radios disponibles pour la station de base dans la sous-bande de fréquence; et,
- déblocage du canal physique d'accès aléatoire pour le ré-attachement des terminaux de communication mobiles avec la station de base dans la sous-bande de fréquence.

10. Procédé selon la revendication l'un quelconque des revendications 1 à 9, dans lequel l'étape de sélection de sous-bandes est réalisée de manière à garantir une valeur déterminée de débit pour chaque liaison de transport de données de type backhaul.

11. Procédé selon la revendication l'un quelconque des revendications 1 à 10, dans lequel des liaisons de transport de données de type backhaul établies entre l'entité de liaison de la station de base améliorée et la station de base de l'autre station de base améliorée se font via des liaisons simultanées bidirectionnelles.

12. Procédé selon l'une quelconque des revendication 1 à 11, dans lequel des liaisons de transport de données de type backhaul établies entre l'entité de liaison de la station de base améliorée et la station de base de l'autre station de base améliorée se font via des liaisons unidirectionnelles, notamment selon un protocole eMBMS.

13. Station de base améliorée (101) pour une structure mobile (113), ladite station de base améliorée comportant une station de base (103) adaptée pour établir des liaisons de communication cellulaire avec des terminaux de communication mobiles (111) via une interface radio déterminée (LTE-Uu) dans au moins une première bande de fréquence (201a) déterminée, ladite station de base améliorée (101) étant **caractérisée en ce qu'**elle comporte une entité de commande (107) et une entité de liaison (109) configurée pour établir une liaison de transport de données sous protocole IP de type backhaul via ladite interface radio déterminée (LTE-Uu) dans ladite première bande de fréquence déterminée avec une station de base (104) d'une autre station de base améliorée (102), ladite station de base améliorée (101) étant configurée pour mettre en œuvre les étapes suivantes :
- détecter (301), par l'entité de commande (107) associée à la station de base de la station de base améliorée (101), un évènement extérieur indicatif de la présence de l'autre station de base améliorée (102) dans l'environnement immédiat de ladite station de base améliorée (101),
- analyser (302), par l'entité de commande (107) de la station de base améliorée (101), l'événement extérieur détecté et sélectionner, sur la base de l'événement extérieur détecté et analysé, des sous-bandes de fréquence à l'intérieur de la première bande de fréquence déterminée ;
- établir (303) une liaison de transport de données de type backhaul via l'interface radio déterminée (LTE-Uu) entre la station de base (103) de la station de base améliorée (101) et une entité de liaison (110) de l'autre station de base améliorée (102) dans une première sous-bande de fréquence (202a,203a) et basculer toutes les liaisons de communication cellulaire établies par la station de base (103) de la station de base améliorée (101) dans ladite première sous-bande de fréquence déterminée ; et,
- établir (304) une liaison de transport de données de type backhaul via l'interface radio déterminée (LTE-Uu) entre l'entité de liaison (109) de la station de base améliorée (101) et une station de base (104) de l'autre station de base améliorée (102) dans une seconde sous-bande de fréquence (202b,203b).

14. Station de base améliorée selon la revendication 13, **caractérisée en ce qu'**elle est configurée pour, à chaque fois qu'un nouvel évènement extérieur est détecté, répéter les étapes d'analyse, de sélection, d'établissement et de basculement.

15. Système de radiocommunication comportant plusieurs structures mobiles sélectionnées par exemple parmi : des campements nomades ou des véhicules tels que des véhicules terrestres, véhicules aériens ou véhicules maritimes, lesdites structures mobiles étant équipées de stations de base améliorées aptes à mettre en œuvre un procédé d'établissement d'une liaison de transport de données sous protocole IP selon l'une des revendication 1 à 12.
